(19) Europäisches Patentamt
European Patent Office
Office européen des brevets

(11) **EP 2 130 083 B1**

(12) **EUROPÄISCHE PATENTSCHRIFT**

(45) Veröffentlichungstag und Bekanntmachung des Hinweises auf die Patenterteilung:
**07.03.2012 Patentblatt 2012/10**

(21) Anmeldenummer: **08734859.5**

(22) Anmeldetag: **28.03.2008**

(51) Int Cl.:
**G02B 13/00** *(2006.01)*    **G02B 23/14** *(2006.01)*
**G02B 27/01** *(2006.01)*

(86) Internationale Anmeldenummer:
**PCT/EP2008/002487**

(87) Internationale Veröffentlichungsnummer:
**WO 2008/119512 (09.10.2008 Gazette 2008/41)**

(54) **OPTISCHES OKULARSYSTEM**

OPTICAL OCULAR SYSTEM

SYSTÈME OCULAIRE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **29.03.2007 DE 102007015278**

(43) Veröffentlichungstag der Anmeldung:
**09.12.2009 Patentblatt 2009/50**

(73) Patentinhaber: **Carl Zeiss AG**
**73446 Oberkochen (DE)**

(72) Erfinder: **ACHTNER, Bertram**
**73430 Aalen (DE)**

(74) Vertreter: **Geyer, Fehners & Partner**
**Patentanwälte**
**Perhamerstrasse 31**
**80687 München (DE)**

(56) Entgegenhaltungen:
**US-A- 5 793 339    US-A1- 2005 052 756**

## Beschreibung

Die vorliegende Erfindung betrifft ein optisches Okularsystem mit einer Abbildungsoptik, die ein in einer Objektebene erzeugtes Bild so abbildet, daß es ein Benutzer in einer Bildebene wahrnehmen kann, wobei die Abbildungsoptik eine erste Linse mit negativer Brechkraft und ein der ersten Linse nachgeordnetes Umlenkelement mit positiver Brechkraft, das eine Faltung des < Strahlenganges mittels einer einzigen Reflexion bewirkt, umfaßt.

Ein solches optisches Okularsystem ist beispielsweise in der EP 1 513 000 A1 beschrieben. Dort wird das Okularsystem in einer HMD-Vorrichtung (Head Mounted Display-Vorrichtung) verwendet. Das eingangs genannte Okularsystem kann jedoch auch in Mikroskopen oder Fernrohren eingesetzt werden.

Nachteilig ist, daß beispielsweise bei der Verwendung in einer HMD-Vorrichtung der Benutzer, falls er aufgrund einer sphärischen Fehlsichtigkeit eine Brille tragen muß, diese Brille auch bei Benutzung der HMD-Vorrichtung zu tragen hat. Das Tragen der Brille und zusätzlich das Tragen der HMD-Vorrichtung wird jedoch häufig als unangenehm angesehen. Auch ist es schwierig, die HMD-Vorrichtung in ihrer bestimmungsgemäßen Form auf den Kopf aufzusetzen, wenn der Benutzer noch eine Brille trägt.

Ausgehend hiervon ist es Aufgabe der Erfindung, ein optisches Okularsystem der eingangs genannten Art so zu verbessern, daß es für Benutzer mit sphärischer Fehlsichtigkeit besser geeignet ist.

Die Aufgabe der Erfindung wird bei einem optischen Okularsystem der eingangs genannten Art dadurch gelöst, daß die erste Linse und die Objektebene eine erste Optikgruppe bilden und eine Verschiebeeinheit vorgesehen ist, die zur Korrektur einer sphärischen Fehlsichtigkeit des Benutzers den Abstand zwischen der ersten Optikgruppe und dem Umlenkelement ändern kann. Damit kann ein Benutzer mit sphärischer Fehlsichtigkeit das optische Okularsystem ohne seine Brille- benutzen, da die Anpassung an die sphärische Fehlsichtigkeit mittels der Verschiebeeinheü realisiert werden kann. Von besonderem Vorteil ist hierbei, daß dazu ein Abstand innerhalb der Abbildungsoptik verändert wird, so daß der Benutzer sich nicht relativ zum optischen Okularsystem bewegen muß, um das Bild scharf wahrnehmen zu können.

Die Verschiebeeinheit kann so ausgebildet sein, daß sie die erste Optikgruppe entlang der optischen Achse der Abbildungsoptik verschieben kann. Insbesondere kann sie einen Verschiebeweg von $\pm$ 2 mm bereitstellen. Damit kann ein Dioptrie-Bereich von $\pm$ 3,5 abgedeckt werden. Durch die Verschiebung entlang der optischen Achse werden verschiebungsbedingte Abbildungsfehler minimiert.

Bevorzugt ist bei der Verschiebung der ersten Optikgruppe der Abstand zwischen der ersten Linse und der Objektebene fixiert bzw. konstant. Es wird also die Optikgruppe als ganzes verschoben.

Sowohl die dem Umlenkelement zugewandte Grenzfläche der ersten Linse als auch die der ersten Linse zugewandte Grenzfläche des Umlenkelementes können jeweils konvex gekrümmt sein. Dies ist eine räumlich sehr günstige Variante, da dann keine Schwierigkeiten hinsichtlich der Fassungen von erster Linse und Umlenkelement auftreten, da der geringste Abstand zwischen den Scheitelpunkten auf der optischen Achse zwischen beiden Grenzflächen auftritt. Somit liegt ausreichend Platz für die Fassungen vor.

Das Umlenkelement ist insbesondere einstückig ausgebildet. Damit ist keine aufwendige Justierung notwendig. Insbesondere weist die Eintritts- und Austrittsfläche des Umlenkelementes eine unterschiedliche Krümmung auf. Die Fläche, an der die Reflexion stattfindet, ist bevorzugt als plane Fläche (also mit einer unendlich großen Krümmung) ausgebildet.

Natürlich kann das Umlenkelement auch mehrstückig ausgebildet sein. In diesem Fall kann es sich beispielsweise um ein 90°-Prisma mit einer planen Umlenkfläche und einer planen Eintritts- und einer planen Austrittsseite handeln. Auf der Austritts- und Eintrittsseite ist jeweils eine Plan-Konvex-Linse mit ihrer planen Seite aufgebracht. Die Plan-Konvex-Linsen können beispielsweise mit dem Prisma verkittet, verklebt oder angesprengt sein. Es ist auch jede andere Art der Verbindung möglich.

Die beiden Grenzflächen der ersten Linse sowie die Eintritts- und Austrittsfläche des Umlenkelementes sind bevorzugt asphärisch gekrümmt, wobei die asphärischen Flächen rotationssymmetrisch und zur optischen Achse der Abbildungsoptik zentriert sind.

Bevorzugt ist die der ersten Linse zugewandte Grenzfläche des Umlenkelementes als diffraktive Fläche ausgebildet. Damit können Farbfehler ausgezeichnet korrigiert werden.

Das Umlenkelement kann die Faltung des Strahlenganges um 70° - 110° bewirken. Bevorzugt ist eine Umlenkung von 90°.

Das Okularsystem kann ein Bildelement zum Erzeugen des Bildes in der Objektebene aufweisen. Dazu kann das Bildelement selbst in der Objektebene angeordnet sein. Es ist jedoch auch möglich, daß eine Abbildung vom Bildelement in die Objektebene durchgeführt wird.

Als Bildelement kann ein selbstleuchtendes oder ein nicht-selbstteuchtendes Anzeigeelement vorgesehen werden, insbesondere kann das Anzeigeelement eine Vielzahl von voneinander unabhängig ansteuerbaren Pixeln aufweisen, die insbesondere in Zeilen und Spalten angeordnet sein können. Bei dem Bildelement kann es sich um ein LCD-Modul, um ein LCoS-Modul oder auch um eine Kippspiegelmatrix handeln.

Die erste Linse und das Bildelement können in einer einzigen Fassung gehalten sein. Damit ist es leicht möglich, den Abstand zwischen Bildelement und Linse konstant zu halten.

Ferner können die erste Linse und das Bildelement formschlüssig miteinander verbunden sein. Dies ist beispielsweise mittels einer entsprechenden Fassung möglich.

Die Abbildungsoptik und das Bildelement bilden ein Augenmodul. Ein solches Augenmodul kann zweimal vorgesehen sein, so daß für jedes Auge des Benutzers ein Augenmodul vorliegt. Damit können binokulare Ausführungsformen realisiert werden.

Insbesondere kann der Abstand zwischen der Optikgruppe und dem Umlenkelement in beiden Augenmodulen voneinander unabhängig veränderbar sein. Damit ist es möglich, unterschiedliche sphärische Fehlsichtigkeiten der beiden Augen des Benutzers zu kompensieren.

Bei dem Okularsystem kann der Strahlengang im Augenmodul von der Bildebene bis zur Austrittspupille der Abbildungsoptik im wesentlichen L-förmig sein, wobei die Augenmodule so angeordnet sind, daß der Abstand der beiden Optikgruppen kleiner ist als der Abstand der beiden Umlenkelemente. Es ist jedoch auch möglich, daß die Augenmodule so angeordnet sind, daß der- Abstand der- beiden Optikgruppen größer ist als der Abstand der beiden Umlenkelemente.

Zwischen dem Bildelement und der ersten Linse kann eine Abschattungsblende vorgesehen sein. Diese Blende dient bevorzugt dazu, unerwünschtes Streulicht zu unterdrücken. Die Abschattungsblende kann insbesondere eine der Kontur eines bildgebenden Bereiches des Bildelementes angepaßte Kontur aufweisen. So kann sie z.B. einen rechteckförmigen transmissiven Bereich aufweisen, wenn der bild gebende Bereich ebenfalls rechteckförmig ist. Insbesondere ist der transmissive Bereich in der Blende etwas größer als der bildgebende Bereich des Bildelementes.

Ferner wird eine Anzeigevorrichtung mit einem erfindungsgemäßen optischen Okularsystem (oder einer entsprechenden Weiterbildung) bereitgestellt, die ferner ein auf dem Kopf zu.. tragendes Haltemodul aufweist, wobei die Abbildungsoptik am Haltemodul befestigt ist und das mittels der Abbildungsoptik abgebildete Bild von einem die Anzeigevorrichtung tragenden Benutzer wahrnehmbar ist.

An dem Haltemodul kann ferner das Bildelement befestigt sein.

Das Haltemodul kann als brillenartiges Gestell, Mütze, Kappe, Band oder in sonstiger Weise ausgebildet sein.

Das erfindungsgemäße Okularsystem (einschließlich seiner Weiterbildungen) kann auch in einem Mikroskop und einem Fernrohr eingesetzt werden, so daß ein entsprechendes Mikroskop bzw. Fernrohr vorliegt.

Es versteht sich, daß die vorstehend genannten und die nachstehenden noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verfassen.

Die Erfindung wird nachfolgend beispielshalber unter Bezugnahme auf die Zeichnungen, die ebenfalls erfindungswesentliche Merkmale offenbaren, noch näher erläutert. Es zeigen:

Fig. 1    eine schematische Draufsicht einer Anzeigevorrichtung mit optischen Okularsystemen;

Fig. 2    eine schematische vergrößerte Ansicht des Okularsystems 1 von Fig. 1, und

Fig. 3    eine weitere Ausführungsform einer Anzeigevorrichtung mit optischen Okularsystemen.

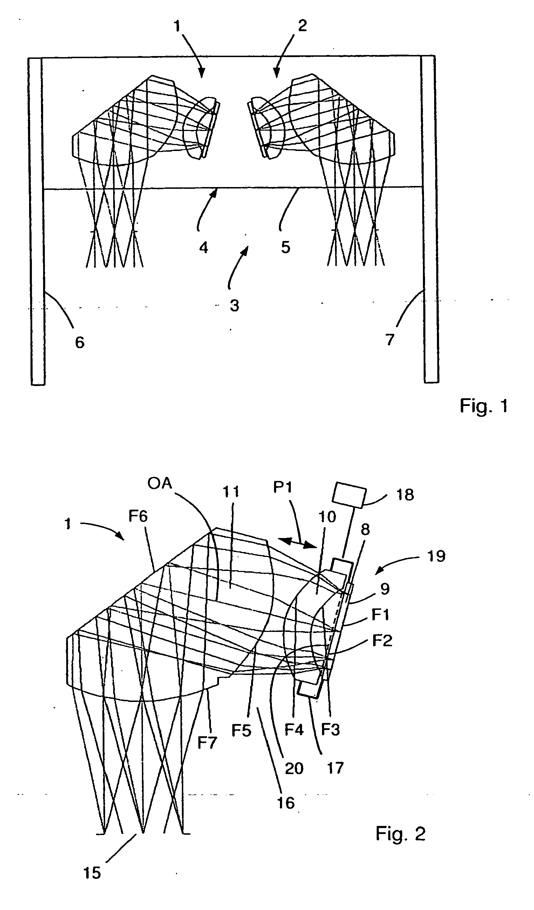

In Fig. 1 ist eine Ausführungsform des erfindungsgemäßen optischen Okularsystems 1, 2 gezeigt, bei der es in einer auf dem Kopf eines Benutzers zu tragenden binokularen Anzeigevorrichtung 3 eingesetzt wird.

Die Anzeigevorrichtung 3, die auch als HMD-Vorrichtung (head mounted display Vorrichtung) bezeichnet werden kann, umfaßt ein Haltemodul 4, das schematisch in Fig. 1 gezeigt ist und ein die beiden optischen Okularsystem 1, 2 aufnehmendes Gehäuse 5 sowie zwei seitliche Bügel 6 und 7 umfaßt. Das Haltemodul 4 ist somit in Art eines Brillengestells ausgebildet, das der Benutzer in gleicher Weise wie eine Brille aufsetzen kann.

Wie Fig. 1 zu entnehmen ist, enthält die Anzeigevorrichtung 3 für das rechte und linke Auge des Benutzers jeweils ein separates optisches Okularsystem 1, 2, die beide bis auf ihre Anordnung im Haltemodul 4 gleich ausgebildet sind. Daher wird in der nachfolgenden Beschreibung nur das optische Okularsystem 1 für das linke Auge des Benutzers detailliert beschrieben.

In Fig. 2 ist das optische Okularsystem 1 vergrößert dargestellt. Wie Fig. 2 zu entnehmen ist, umfaßt es ein bilderzeugendes Element 8, das in einer Objektebene 9 ein darzustellendes Bild erzeugt. Dies wird hier dadurch erreicht, daß der bilderzeugende Bereich des Elementes 8 in der Objektebene 9 liegt. Das bilderzeugende Element kann ein selbstleuchtendes oder ein nicht-selbstleuchtendes Display sein. Es kann z.B. als LCD-, LCoS-Modul oder als Kippspiegelmatrix ausgebildet sein.

Dem bilderzeugenden Element 8 ist eine Konkav-Konvex-Linse 10 nachgeordnet, die formschlüssig mit dem bilderzeugenden Element 8 verbunden ist. Dies ist in dem hier beschriebenen Beispiel durch eine gemeinsame Fassung 17, die nur in Fig. 2 schematisch eingezeichnet ist, verwirklicht.

Der Linse 10 ist ein Umlenkelement 11 mit einer gekrümmten Eintrittsfläche F5, einer planen Umlenkfläche F6 und einer gekrümmten Austrittsfläche F7 nachgeordnet. Die Austrittspupille des optischen Okularsystems 1 ist mit dem Bezugszeichen 15 bezeichnet.

Im Betrieb wird das mittels dem bilderzeugenden Element 8 erzeugte Bild über die Linse 10, die negative Brechkraft aufweist, und das Umlenkelement bzw. Umlenkprisma 11, das positive Brechkraft aufweist, so in die Austrittspupille 15 als virtuelles Bild abgebildet, daß ein die Anzeigevorrichtung 3 tragender Benutzer das abgebildete Bild wahrnehmen kann. Die Linse 10 bildet zusammen mit dem Umlenkelement 11 eine Abbildungsoptik 16.

Um die Anzeigevorrichtung 3 an eine sphärische Fehlsichtigkeit des Benutzers anpassen zu können, ist eine Verschiebeeinheit 18 (die nur in Fig. 2 eingezeichnet ist) vorgesehen, die das bilderzeugende Element 8 und die Linse 10, die zusammen eine erste Optikgruppe 19 bilden, entlang der optischen Achse OA der Abbildungsoptik 16 um $\pm$ 2 mm verschieben kann, wie durch den Doppelpfeil P1 angedeutet ist. Damit kann eine Fehlsichtigkeit im Bereich von $\pm$ 3,5 Dioptrie korrigiert werden.

Bei dem hier beschriebenen Okularsystem liegt die Austrittspupille 15 14 mm nach dem Linsenscheitel der Austrittsfläche F7 und weist eine Größe von 6 mm x 10 mm auf. Die Diagonale des dargestellten Bildes wird unter einem Gesichtsfeldwinkel von mindestens 30° dargestellt und die Umlenkung durch die plane Umlenkfläche F6 liegt bevorzugt im Bereich von 70° - 110°. Die Linse 10 sowie das Umlenkelement 11 sind bevorzugt jeweils aus eine optischen Kunststoff gebildet, so daß das Gewicht des Okularsystems 1 niedrig ist.

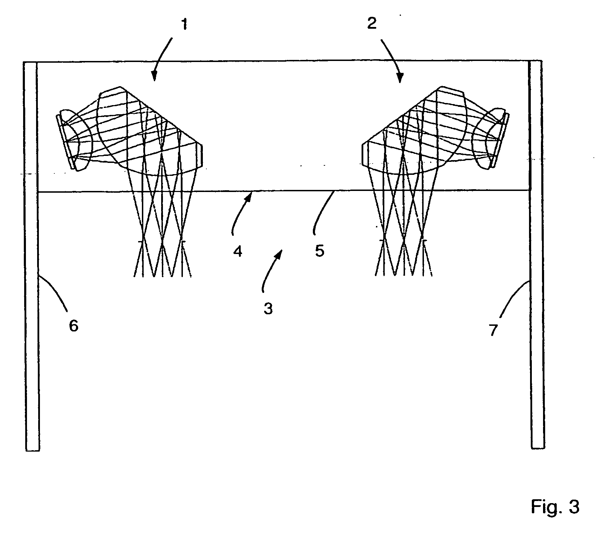

Zwischen dem bilderzeugenden Element 8 und der Linse 10 kann eine Blende 20 vorgesehen sein. Die Blende 20 ist lediglich in Fig. 3 eingezeichnet (als gestrichelte Linie) und weist bevorzugt einen transmissiven Bereich (z.B eine Ausnehmung) mit gleicher Kontur wie der bildgebende Bereich des bilderzeugenden Elementes 8 auf. Der transmissive Bereich kann etwas größer als der bildgebende Bereich sein, um unerwünschtes Streulicht zu unterdrücken. In dem hier beschriebenen Beispiel weist der bildgebende Bereich des Elementes 8 eine Rechteckform auf, so daß auch der transmissive Bereich der Abschattungsblende 20 rechteckförmig ausgebildet ist.

Die Eintritts- und Austrittsfläche F5, F7 sowie die beiden Grenzflächen F3, F4 der Linse 10 sind asphärische, rotationssymmetrische Flächen, die zur optischen Achse OA der Abbildungsoptik 16 zentriert sind. Das Material der Linse 10 ist verschieden zu dem Material des Umlenkelementes 11, wobei das Material des Umlenkelementes 11 eine geringere Dispersion aufweist als das Material der Linse 10.

Um eine ausgezeichnete Farbkorrektur zu gewährleisten, wird zusätzlich noch die Eintrittsfläche F5 als diffraktive Fläche ausgebildet. Die Ausbildung der Eintrittsfläche F5 als diffraktive Fläche bringt den Vorteil mit sich, daß es sich hierbei um eine Fläche innerhalb der Abbildungsoptik 16 handelt, so daß diese vor Verschmutzungen leicht geschützt werden kann.

Die diffraktive Fläche F5 weist ein Kinoform-Profil auf. Im Detail umfaßt die diffraktive Fläche F5 konzentrische Ringe mit dem Linsenscheitel der Eintrittsfläche F5 als Mittelpunkt. Jeder Ring hat einen inneren und einen äußeren Radius. Der innere Radius des ersten Rings ist null. Der äußere Radius des m-ten Rings ist der innere Radius des m+1-ten Ringes. Die Breite der Ringe wird von der Mitte zum Rand der Linse kontinuierlich kleiner. Die Furchentiefe am inneren Radius ist null, am äußeren Radius beträgt sie d. Beim Übergang vom m-ten Ring auf den m+1-ten Ring ist somit eine Stufe der Höhe d vorhanden. Die diffraktive Fläche kann mit der nachfolgenden Phasenprofilfunktion $\varphi$ beschrieben werden:

$$\varphi = \frac{2\pi}{\lambda_0} \sum_n C_n r^{2n}$$

dabei steht $\lambda_0$ für die Referenzwellenlänge und $C_n$ sind die Koeffizienten des Phasenpolynoms. Der Radius r des m-ten Ringes berechnet sich aus

$$m\,\lambda_0 = \sum_n C_n r^{2n} \quad m = 1, 2, 3, \ldots$$

es gibt maximal N Ringe, wobei

$$N = \frac{1}{\lambda_0} \sum_n C_n r_{max}^{2n}$$

dabei steht $r_{max}$ für den halben Linsendurchmesser.

Die Furchentiefe d an jedem Ring beträgt

$$\mathrm{d} = \frac{\lambda_0}{n_0 - 1},$$

wobei $n_0$ der Brechungsindex des Materials für $\lambda_0$ ist. Bei der hier beschriebenen Ausführungsform hat sich gezeigt, daß es ausreichend war, die diffraktive Fläche mit dem Koeffizienten $C_1$ zu beschreiben. Dieser ist in der nachfolgenden Tabelle 3 angegeben.

Die asphärischen Flächen werden mit der nachfolgenden Formel (Pfeilhöhenformel) beschrieben

$$z(h) = \frac{\rho h^2}{1 + \sqrt{1 - (1+K)\rho^2 h^2}} + Ah^4 + Bh^6 + Ch^8 + Dh^{10} + Eh^{12} + Fh^{14} + Gh^{16} + Hh^{18}$$

z          Pfeilhöhe
K          Exzentrizität
p          Scheitelkrümmung
h          Höhe
A, B, C, ...H     Koeffizienten für Terme höherer Ordnung.

Der genaue optische Aufbau der Abbildungsoptik 16 läßt sich den nachfolgenden Tabellen 1 bis 4 entnehmen, wobei Tabelle 1 die Linse 10 und das Umlenkelement 11 beschreibt. Die asphärischen Flächen sind in Tabelle 2 und die diffraktive Fläche ist in Tabelle 3 genauer angegeben. In Tabelle 4 sind die verwendeten Materialien (siehe Spalte "Material" von Tabelle) charakterisiert. In der Spalte "Flächentyp" der Tabelle 1 ist noch angegeben, ob es sich um eine asphärische und gegebenenfalls eine diffraktive Fläche handelt.

Tabelle 1:

| Fläche | Flächentyp | Radius [mm] | Abstand zur nächsten Fläche [mm] | Material |
|---|---|---|---|---|
| 9 | | unendlich | 0,000000 | |
| F1 | | unendlich | 0,900000 | NBK7_SCHOTT |
| F2 | | unendlich | 3,038000 | |
| F3 | asphärisch | -6,44595 | 3,800000 | PSTYR |
| F4 | asphärisch | -8,97318 | 2,100000 | |
| F5 | asphärisch, diffraktiv | 13,15788 | 17,500000 | 480R |
| F6 | | unendlich | 16,500000 | 480R |
| F7 | asphärisch | -20,71599 | 18,300000 | |
| 15 | | unendlich | | |

Tabelle 2:

| Fläche | K | A | B | C |
|---|---|---|---|---|
| F3 | 0,000000 | -0,110584E-02 | 0,261827E-03 | -0,134534E-04 |
| F4 | 0,000000 | 0,405943E-04 | 0,270194E-04 | -0,769285E-06 |
| F5 | 0,000000 | -0,682894E-04 | -0,180150E-05 | 0,168871E-07 |

| F7 | 0,000000 | 0,388888E-04 | -0;199410E-06 | 0,239487E-08 |

|    | D | E | F | G | H |
|----|---|---|---|---|---|
| F3 | 0,336914E-06 | -0289232E-08 | -0,224721E-10 | 0,669441E-13 | 0,892241E-14 |
| F4 | 0,771330E-08 | 0,682475E-11 | -0,384074E-12 | | |
| F5 | -0,744599E-10 | 0,475142E-13 | | | |
| F7 | -0,174143E-10 | 0,468155E-13 | | | |

Tabelle 3:

| Fläche | $C_1$ | $\lambda_0$ [nm] | Beugungsordnung | N | $R_1$ [mm] | $R_N$ [mm] | d [mm] |
|--------|-------|------------------|-----------------|---|-----------|-----------|--------|
| F7 | $-2,2919 \times 10^{-3}$ | 546,07 | 1 | 599 | 0,4881 | 11,9465 | 0.001 |

Tabelle 4:

| Material | Kurzname | $n_d$ | $\nu_d$ | $\rho$ in g/cm$^3$ |
|----------|----------|-------|---------|--------------------|
| NBK_7 SCHOTT | NBK_7 SCHOTT | 1,51680 | 64,17 | 2,51 |
| PMMA | PMMA | 1,49178 | 57,99 | 1,19 |
| POLYSTYROL | POLY | 1,59250 | 30,84 | 1,10 |
| POLYCARBONAT | PC | 1,58500 | 30,00 | 1,25 |
| TOPAS | TOPAS | 1,53320 | 56,72 | 1,02 |
| ZEONEX E48R | E48R | 1,52996 | 56,24 | 1,01 |
| ZEONEX 330R | 330R | 1,50904 | 52,80 | 1,01 |
| ZEONEX 480R | 480R | 1,52470 | 56,24 | 1,01 |

In Tabelle 4 bezeichnet $n_d$ die Brechzahl für 587,56 nm, $\nu_d$ ist die entsprechende Abbesche Zahl und $\rho$ ist die Dichte.

Die Brennweite $f_1$ der Linse 10, die Brennweite $f_2$ des Umlenkelementes 11 sowie die Brennweite f der Abbildungsoptik 16 sind für das oben in Verbindung mit den Tabellen 1 - 4 beschriebene Beispiel 1 sowie die nachfolgenden noch zu beschreibenden Beispiele 2 - 9 in Tabelle 5 angegeben. In den Beispielen 1 - 6 und im Beispiel 9 ist f = 19,7mm, das diagonale Gesichtsfeld ist 32°. Im Beispiel 7 beträgt f = 21,0 und das diagonale Gesichtsfeld ist 30°. Im Beispiel 8 beträgt f = 25,4 und das diagonale Gesichtsfeld ist 25°.

Tabelle 5:

| | Brennweite f | Teilbrennweiten | |
| | | $f_1$ | $f_2$ |
|-----------|-------------------|---------|-------------------|
| | Abbildungsoptik 16 | Linse 10 | Umlenkelement 11 |
| Beispiel 1 | 19.7 | -106.0 | 22.5 |
| Beispiel 2 | 19.7 | -101.7 | 22.5 |
| Beispiel 3 | 19.7 | -102.4 | 22.4 |
| Beispiel 4 | 19.7 | 103.5 | 22.4 |

(fortgesetzt)

| | Brennweite f | Teilbrennweiten | |
| | | f₁ | f₂ |
|---|---|---|---|
| | Abbildungsoptik 16 | Linse 10 | Umlenkelement 11 |
| Beispiel 5 | 19.7 | -103.7 | 22.3 |
| Beispiel 6 | 19.7 | -102.5 | 22.3 |
| Beispiel 7 | 21.0 | -57.2 | 22.8 |
| Beispiel 8 | 25.4 | -27.6 | 25.1 |
| Beispiel 9 | 19.7 | -233.5 | 23.2 |

Die Brennweite des asphärischen Umlenkelementes 11 variiert nur wenig und liegt im Bereich der Brennweite der Abbildungsoptik 16 aus Umlenkelement 11 und Linse 10. Die Brennweite der Linse 10 variiert wenig, wenn lediglich unterschiedliche Materialien verwendet werden, wobei die Brechzahl- und Dispersionsunterschiede der Materialien für die Linse 10 gering sind. Die Brennweite der Linse 10 variiert sehr stark, wenn die Brennweite der Abbildungsoptik 16 und damit das abzubildende Feld variiert werden.

Für die Brennweiten f, f₁ und f₂ gilt folgender Zusammenhang:

$$0,9 \cdot f < f_1 < 1,5 \cdot f \quad \text{und} \quad 1,0 \cdot f < \left| f_2 \right| < 13,0 \cdot f$$

Nachfolgend werden in gleicher Weise wie für das bereits beschriebene Beispiel die Optikdaten für acht weitere Ausführungsformen angegeben, wobei in Beispiel 9 keine diffraktive Fläche vorgesehen ist.

Beispiel 2:

| Fläche | Flächentyp | Radius [mm] | Abstand zur nächsten Fläche [mm] | Material |
|---|---|---|---|---|
| 9 | | unendlich | 0,000000 | |
| F1 | | unendlich | 0,900000 | NBK7_SCHOTT |
| F2 | | unendlich | 3,123190 | |
| F3 | asphärisch | -6,31092 | 3,700000 | PCARB |
| F4 | asphärisch | -8,58638 | 2,100000 | |
| F5 | asphärisch, diffraktiv | 13,42140 | 17,500000 | 480R |
| F6 | | unendlich | 16,500000 | 480R |
| F7 | asphärisch | -20,70854 | 18,300000 | |
| 15 | | unendlich | | |

| Fläche | K | A | B | C | D |
|---|---|---|---|---|---|
| F3 | 0,000000 | -0,105810E-02 | 0,268979E-03 | -0,147703E-04 | 0,372695E-06 |
| F4 | 0,000000 | 0,548035E-04 | 0,260686E-04 | -0,771603E-06 | 0,783687E-08 |
| F5 | 0,000000 | -0,676831E-04 | -0,173704E-05 | 0,172058E-07 | 0,732592E-10 |
| F7 | 0,000000 | 0,362404E-04 | -0,186980E-06 | 0,260500E-08 | -0,167321E-10 |

| | E | F | G | H | J |
|---|---|---|---|---|---|
| F3 | -0,319554E-08 | -0,229890E-10 | 0,129444E-12 | 0,921098E-14 | 0,190547E-16 |
| F4 | 0,102057E-10 | -0,314121E-12 | | | |
| F5 | 0,533178E-13 | | | | |
| F7 | 0,404917E-13 | | | | |

| Fläche | $C_1$ | $\lambda_0$ [nm] | Beugungsordnung | N | $R_1$ [mm] | $R_N$ [mm] | d [mm] |
|---|---|---|---|---|---|---|---|
| F7 | $-2,2224 \times 10^{-3}$ | 546,07 | 1 | 580 | 0,4957 | 11,9378 | 0,001 |

Beispiel 3:

| Fläche | Flächentyp | Radius [mm] | Abstand zur nächsten Fläche [mm] | Materials |
|---|---|---|---|---|
| 9 | | unendlich | 0,000000 | |
| F1 | | unendlich | 0,900000 | NBK7_SCHOTT |
| F2 | | unendlich | 3,120000 | |
| F3 | asphärisch | -6,37965 | 3,700000 | PSTYR |
| F4 | asphärisch | -8,66726 | 2,127559 | |
| F5 | asphärisch, diffraktiv | 13,43253 | 17,500000 | E48R |
| F6 | | unendlich | 16,500000 | E48R |
| F7 | asphärisch | -20,87079 | 18,300000 | |
| 15 | | unendlich | | |

| Fläche | K | A | B | C | D |
|---|---|---|---|---|---|
| F3 | 0,000000 | -0,105700E-02 | 0,270109E-03 | -0,148213E-04 | 0,371356E-06 |
| F4 | 0,000000 | 0,550271E-04 | 0,259918E-04 | -0,770428E-06 | 0,781146E-08 |
| F5 | 0,000000 | -0,674612E-04 | -0,173212E-05 | 0,172212E-07 | -0,732963E-10 |
| F7 | 0,000000 | 0,360549E-04 | -0,187285E-06 | 0,258817E-08 | -0,167328E-10 |

| | E | F | G | H | J |
|---|---|---|---|---|---|
| F3 | -0,316610E-08 | -0,226518E-10 | 0,162353E-12 | 0,908005E-14 | -0,198492E-16 |
| F4 | 0,969201E-11 | -0,314977E-12 | | | |
| F5 | 0,524624E-13 | | | | |
| F7 | 0,414271E-13 | | | | |

| Fläche | $C_1$ | $\lambda_0$ [nm] | Beugungsordnung | N | $R_1$[mm] | $R_N$ [mm] | d [mm] |
|---|---|---|---|---|---|---|---|
| F7 | $-2,2188 \times 10^{-3}$ | 546,07 | 1 | 579 | 0,4961 | 11,9374 | 0,001 |

Beispiel 4:

| Fläche | Flächentyp | Radius [mm] | Abstand zur nächsten Fläche [mm] | Material |
|---|---|---|---|---|
| 9 | | unendlich | 0,000000 | |
| F1 | | unendlich | 0,900000 | NBK7_SCHOTT |
| F2 | | unendlich | 3,120000 | |
| F3 | asphärisch | -6,37840 | 3,700000 | PCARB |
| F4 | asphärisch | -8,65554 | 2,150248 | |
| F5 | asphärisch, diffraktiv | 13,42553 | 17,500000 | E48R |
| F6 | | unendlich | 16,500000 | E48R |
| F7 | asphärisch | -20,92638 | 18,300000 | |
| 15 | | unendlich | | |

| Fläche | K | A | B | C | D |
|---|---|---|---|---|---|
| F3 | 0,000000 | -0,102859E-02 | 0,268403E-03 | -0,148407E-04 | 0,371361E-06 |
| F4 | 0,000000 | 0,390289E-04 | 0,261050E-04 | -0,767730E-06 | 0,780055E-08 |
| F5 | 0,000000 | -0,675269E-04 | -0,173137E-05 | 0,172109E-07 | -0,731766E-10 |
| F7 | 0,000000 | 0,362318E-04 | -0,185754E-06 | 0,258608E-08 | -0,166517E-10 |

| | E | F | G | H | J |
|---|---|---|---|---|---|
| F3 | -0,317289E-08 | -0,221025E-10 | 0,169215E-12 | 0,874111E-14 | -0,150746E-16 |
| F4 | 0,918020E-11 | -0,317003E-12 | | | |
| F5 | 0,535132E-13 | | | | |
| F7 | 0,444178E-13 | | | | |

| Fläche | $C_1$ | $\lambda_0$ [nm] | Beugungsordnung | N | $R_1$ [mm] | $R_N$ [mm] | d [mm] |
|---|---|---|---|---|---|---|---|
| F7 | $-2,1824 \times 10^{-3}$ | 546,07 | 1 | 570 | 0,5002 | 11,9424 | 0,001 |

Beispiel 5:

| Fläche | Flächentyp | Radius [mm] | Abstand zur nächsten Fläche [mm] | Material |
|---|---|---|---|---|
| 9 | | unendlich | 0,000000 | |
| F1 | | unendlich | 0,900000 | NBK7_SCHOTT |
| F2 | | unendlich | 3,124979 | |
| F3 | asphärisch | -6,39073 | 3,700000 | PSTYR |
| F4 | asphärisch | -8,66860 | 2,100000 | |
| F5 | asphärisch, diffraktiv | 13,43194 | 17,500000 | TOPAS |
| F6 | | unendlich | 16,500000 | TOPAS |
| F7 | asphärisch | -21,01111 | 18,300000 | |
| 15 | | unendlich | | |

| Fläche | K | A | B | C | D |
|---|---|---|---|---|---|
| F3 | 0,000000 | -0,113039E-02 | 0,273295E-03 | -0,147757E-04 | 0,370988E-06 |
| F4 | 0,000000 | 0,734150E-04 | 0,258357E-04 | -0,771096E-06 | 0,781671E-08 |
| F5 | 0,000000 | -0,674430E-04 | -0,173202E-05 | 0,172200E-07 | -0,732795E-10 |
| F7 | 0,000000 | 0,360408E-04 | -0,187399E-06 | 0,258799E-08 | -0,167200E-10 |

| | E | F | G | H | J |
|---|---|---|---|---|---|
| F3 | -0,319593E-08 | -0,239540E-10 | 0,144448E-12 | 0,956120E-14 | 0,169992E-17 |
| F4 | 0,973764E-11 | -0,314155E-12 | | | |
| F5 | 0,524923E-13 | | | | |
| F7 | 0,413999E-13 | | | | |

| Fläche | $C_1$ | $\lambda_0$ [nm] | Beugungsordnung | N | $R_1$ [mm] | $R_N$ [mm] | d [mm] |
|---|---|---|---|---|---|---|---|
| F7 | $-2,2154 \times 10^{-3}$ | 546,07 | 1 | 579 | 0,4965 | 11,9463 | 0,001 |

Beispiel 6:

| Fläche | Flächentyp | Radius [mm] | Abstand zur nächsten Fläche [mm] | Material |
|---|---|---|---|---|
| 9 | | unendlich | 0,000000 | |
| F1 | | unendlich | 0,900000 | NBK7_SCHOTT |
| F2 | | unendlich | 3,129602 | |
| F3 | asphärisch | -6,32866 | 3,700000 | PCARB |
| F4 | asphärisch | -8,60206 | 2,100000 | |
| F5 | asphärisch, diffraktiv | 13,43205 | 17,500000 | TOPAS |
| F6 | | unendlich | 16,500000 | TOPAS |
| F7 | asphärisch | -21,00964 | 18,300000 | |
| 15 | | unendlich | | |

| Fläche | K | A | B | C | D |
|---|---|---|---|---|---|
| F3 | 0,000000 | -0,110810E-02 | 0,272724E-03 | -0,147855E-04 | 0,370907E-06 |
| F4 | 0,000000 | 0,718451E-04 | 0,258913E-04 | -0,770928E-06 | 0,781572E-08 |
| F5 | 0,000000 | -0,674595E-04 | -0,173228E-05 | 0,172177E-07 | -0,732712E-10 |
| F7 | 0,000000 | 0,360787E-04 | -0,186836E-06 | 0,258799E-08 | -0,167306E-10 |

| | E | F | G | H | J |
|---|---|---|---|---|---|
| F3 | -0,319437E-08 | -0,236943E-10 | 0,148886E-12 | 0,957053E-14 | 0,245264E-17 |
| F4 | 0,974128E-11 | -0,314425E-12 | | | |
| F5 | 0,524635E-13 | | | | |
| F7 | 0,412770E-13 | | | | |

| Fläche | $C_1$ | $\lambda_0$ [nm] | Beugungsordnung | N | $R_1$ [mm] | $R_N$ [mm] | d [mm] |
|---|---|---|---|---|---|---|---|
| F7 | $-2,2182 \times 10^{-3}$ | 546,07 | 1 | 579 | 0,4962 | 11,9389 | 0,001 |

Beispiel 7:

| Fläche | Flächentyp | Radius [mm] | Abstand zur nächsten Fläche [mm] | Material |
|---|---|---|---|---|
| 9 | | unendlich | 0,000000 | |
| F1 | | unendlich | 0,900000 | NBK7_SCHOTT |
| F2 | | unendlich | 3,524287 | |
| F3 | asphärisch | -6,21922 | 3,700000 | PSTYR |
| F4 | asphärisch | -9,29975 | 1,851370 | |
| F5 | asphärisch, diffraktiv | 14,11834 | 17,500000 | E48R |
| F6 | | unendlich | 16,500000 | E48R |
| F7 | asphärisch | -20,64291 | 18,300000 | |
| 15 | | unendlich | | |

| Fläche | K | A | B | C | D |
|---|---|---|---|---|---|
| F3 | 0,000000 | -0,203782E-02 | 0,285716E-03 | -0,139103E-04 | 0,363895E-06 |
| F4 | 0,000000 | -0,200704E-03 | 0,310975E-04 | -0,794131E-06 | 0,747524E-08 |
| F5 | 0,000000 | -0,833537E-04 | -0,160281E-05 | 0,174477E-07 | -0,766781E-10 |
| F7 | 0,000000 | 0,301837E-04 | -0,212268E-06 | 0,264276E-08 | -0,155875E-10 |

| | E | F | G | H | J |
|---|---|---|---|---|---|
| F3 | -0,344951E-08 | -0,287210E-10 | 0,213991E-12 | 0,866484E-14 | 0,787728E-16 |
| F4 | 0,801007E-11 | -0,346847E-12 | | | |
| F5 | 0,621673E-13 | | | | |
| F7 | 0,336162E-13 | | | | |

| Fläche | $C_1$ | $\lambda_0$ [nm] | Beugungsordnung | N | $R_1$ [mm] | $R_N$ [mm] | d [mm] |
|---|---|---|---|---|---|---|---|
| F7 | $-2,2507 \times 10^{-3}$ | 546,07 | 1 | 588 | 0,4926 | 11,9440 | 0,001 |

Beispiel 8:

| Fläche | Flächentyp | Radius [mm] | Abstand zur nächsten Fläche [mm] | Material |
|---|---|---|---|---|
| 9 | | unendlich | 0,000000 | |
| F1 | | unendlich | 0,900000 | NBK7_SCHOTT |
| F2 | | unendlich | 3,034584 | |
| F3 | asphärisch | -5,79408 | 3,700000 | PSTYR |
| F4 | asphärisch | -11,092 | 4,6047 | |
| F5 | asphärisch, diffraktiv | 18,48583 | 17,0 | E48R |
| F6 | | unendlich | 16,0 | E48R |
| F7 | asphärisch | -21,090 | 18,300000 | |
| 15 | | unendlich | | |

| Fläche | K | A | B | C | D |
|---|---|---|---|---|---|
| F3 | 0,000000 | -0,294837E-03 | 0,217886E-03 | -0,135366E-04 | 0,417117E-06 |
| F4 | 0,000000 | 0,294642E-03 | 0,155171E-04 | -0,763873E-06 | 0,907407E-08 |
| F5 | 0,000000 | -0,558147E-04 | -0,131968E-05 | 0,161370E-07 | -0,676346E-10 |
| F7 | 0,000000 | 0,203916E-04 | -0,188128E-06 | 0,229619E-08 | -0,166872E-10 |

| | E | F | G | H | J |
|---|---|---|---|---|---|
| F3 | -0,323209E-08 | -0,629421E-10 | -0,810392E-12 | 0,130009E-13 | 0,118379E-14 |
| F4 | 0,301720E-10 | -0,547672E-12 | | | |
| F5 | 0,123929E-12 | | | | |
| F7 | 0,540813E-13 | | | | |

| Fläche | $C_1$ | $\lambda_0$ [nm] | Beugungsordnung | N | $R_1$ [mm] | $R_N$ [mm] | d [mm] |
|---|---|---|---|---|---|---|---|
| F7 | $-1,6334 \times 10^{-3}$ | 546,07 | 1 | 465 | 0,5782 | 12,4683 | 0,001 |

Beispiel 9:

| Fläche | Flächentyp | Radius [mm] | Abstand zur nächsten Fläche [mm] | Material |
|---|---|---|---|---|
| 9 | | unendlich | 0,000000 | |
| F1 | | unendlich | 0,900000 | NBK7_SCHOTT |
| F2 | | unendlich | 3,607542 | |
| F3 | asphärisch | -6,46993 | 3,700000 | PSTYR |
| F4 | asphärisch | -8,23353 | 2,100000 | |
| F5 | asphärisch | 12,82389 | 17,500000 | 480R |
| F6 | | unendlich | 16,500000 | 480R |
| F7 | asphärisch | -21,79411 | 18,300000 | |
| 15 | | unendlich | | |

| Fläche | K | A | B | C | D |
|---|---|---|---|---|---|
| F3 | 0,000000 | -0,101416E-02 | 0,240311E-03 | -0,133574E-04 | 0,354515E-06 |
| F4 | 0,000000 | -0,127675E-03 | 0,344968E-04 | -0,917430E-06 | 0,766501E-08 |
| F5 | 0,000000 | -0,444101E-04 | -0,202281E-05 | 0,173608E-07 | -0,689916E-10 |
| F7 | 0,000000 | 0,401394E-04 | -0,245898E-06 | 0,247065E-08 | -0,168386E-10 |

| | E | F | G | H | J |
|---|---|---|---|---|---|
| F3 | -0,318319E-08 | -0,328007E-10 | 0,196918E-12 | 0,133085E-13 | -0,658499E-16 |
| F4 | 0,356150E-10 | -0,530855E-12 | | | |
| F5 | -0,110641E-13 | | | | |
| F7 | 0,437093E-13 | | | | |

## Patentansprüche

1. Optisches Okularsystem mit einem Bildelement (8) zum Erzeugen eines Bildes in einer Objektebene (9) und einer Abbildungsoptik (16), die das in der Objektebene (9) erzeugte Bild so abbildet, daß es ein Benutzer in einer Bildebene (15) wahrnehmen kann,
wobei die Abbildungsoptik (16) eine erste Linse (10) mit negativer Brechkraft und ein der ersten Linse (10) nachgeordnetes Umlenkelement (11) mit positiver Brechkraft, das eine Faltung des Strahlenganges mittels einer einzigen Reflexion bewirkt, umfaßt, wobei die der ersten Linse (10) zugewandte Grenzfläche (F5) des Umlenkelementes (11) konvex gekrümmt ist,
**dadurch gekennzeichnet, daß**
die erste Linse (10) und das Bildelement (8) eine erste Optikgruppe (19) bilden und eine Verschiebeeinheit (18) vorgesehen ist, die zur Korrektur einer sphärischen Fehlsichtigkeit des Benutzers den Abstand zwischen der ersten Optikgruppe (19) und dem Umlenkelement (11) ändern kann, wobei die dem Umlenkelement (11) zugewandte Grenzfläche (F4) der ersten Linse (10) konvex gekrümmt ist.

2. Okularsystem nach Anspruch 1, **dadurch gekennzeichnet, daß** die Verschiebeeinheit (18) die erste Optikgruppe (19) entlang der optischen Achse (OA) der Abbildungsoptik (16) verschieben kann.

3. Okularsystem nach einem der obigen Ansprüche, **dadurch gekennzeichnet, daß** in der ersten Optikgruppe (19) der Abstand zwischen der ersten Linse (10) und der Objektebene (9) fixiert ist.

4. Okularsystem nach einem der obigen Ansprüche, **dadurch gekennzeichnet, daß** das Umlenkelement (11) einstückig ausgebildet ist.

5. Okularsystem nach einem der obigen Ansprüche, **dadurch gekennzeichnet, daß** beide Grenzflächen (F3, F4) der ersten Linse (10) sowie Eintritts- und Austrittsfläche (F5, F7) des Umlenkelementes (11) asphärisch gekrümmt sind, wobei die asphärischen Flächen rotationssymmetrisch und zur optischen Achse (OA) der Abbildungsoptik (16) zentriert sind.

6. Okularsystem nach einem der obigen Ansprüche, **dadurch gekennzeichnet, daß** die der ersten Linse (10) zugewandte Grenzfläche (F5) des Umlenkelements (11) als diffraktive Fläche ausgebildet ist.

7. Okularsystem nach einem der obigen Ansprüche, **dadurch gekennzeichnet, daß** das Umlenkelement (11) die Faltung des Strahlengangs um 70°- 110°, bevorzugt 90° bewirkt.

8. Okularsystem nach einem der obigen Ansprüche, **dadurch gekennzeichnet, daß** die erste Linse-(-10)-und das-Bildelement (9) in einer einzigen Fassung (17) gehalten sind.

9. Okularsystem nach einem der obigen Ansprüche, **dadurch gekennzeichnet, daß** die erste Linse (10) und das Bildelement (9) formschlüssig miteinander verbunden sind.

10. Okularsystem nach einem der obigen Ansprüche, **dadurch gekennzeichnet, daß** die Abbildungsoptik (16) und das Bildelement (9) ein Augenmodul bilden, das zweimal für beide Augen des Benutzers vorgesehen ist.

11. Okularsystem nach Anspruch 10, **dadurch gekennzeichnet, daß** der Abstand zwischen der Optikgruppe (19) und dem Umlenkelement (11) in beiden Augenmodulen voneinander unabhängig veränderbar ist.

12. Okularsystem nach Anspruch 10 oder 11, **dadurch gekennzeichnet, daß** der Strahlengang im Augenmodul von der Bildebene (9) bis zur Austrittspupille (15) der Abbildungsoptik (16) im wesentlichen L-förmig ist, wobei die Augenmodule so angeordnet sind, daß der Abstand der beiden Optikgruppen (19) kleiner ist als der Abstand der beiden Umlenkelemente (11).

13. Okularsystem nach Anspruch 10 oder 11, **dadurch gekennzeichnet, daß** der Strahlengang im Augenmodul von der Bildebene (9) bis zur Austrittspupille (15) der Abbildungsoptik (16) im wesentlichen L-förmig ist, wobei die Augenmodule so angeordnet sind, daß der Abstand der beiden Optikgruppen (19) größer ist als der Abstand der beiden Umlenkelemente (11).

14. Anzeigevorrichtung mit einem optischen Okularsystem nach einem der obigen Ansprüche und einem auf dem Kopf zu tragenden Haltemodul (4), bei der die Abbildungsoptik (16) am Haltemodul (4) befestigt ist, wobei das mittels der Abbildungsoptik (16) abgebildete Bild von einem die Anzeigevorrichtung tragenden Benutzer wahrnehmbar ist.

15. Anzeigevorrichtung nach Anspruch 14, bei der das Bildelement (9) am Haltemodul (4) befestigt ist.

**Claims**

1. An optical ocular system having an image element (8) for generating the image in an object plane (9) and an imaging optic (16), which images the image generated in the object plane (9) so that a user can perceive it in an image plane (15),
the imaging optic (16) comprising a first lens (10) having negative refractive power and a deflection element (11), which is downstream from the first lens (10), having positive refractive power, which causes folding of the beam path using a single reflection, wherein the boundary surface (F5) of the deflection element (11) facing toward the first lens (10) is curved convexly, **characterized in that** the first lens (10) and the image element (8) form a first optic group (19) and a displacement unit (18) is provided, which can change the spacing between the first optic group (19) and the deflection element (11) to correct spherical defective vision of the user, wherein the boundary surface (F4) of the first lens (10) facing toward the deflection element (11) is curved convexly.

2. The ocular system according to Claim 1, **characterized in that** the displacement unit (18) can displace the first optic group (19) along the optical axis (OA) of the imaging optic (16).

3. The ocular system according to one of the preceding claims, **characterized in that** the spacing between the first lens (10) and the object plane (9) is fixed in the first optic group (19).

4. The ocular system according to one of the preceding claims, **characterized in that** the deflection element (11) is implemented in one piece.

5. The ocular system according to one of the preceding claims, **characterized in that** both boundary surfaces (F3, F4) of the first lens (10) and the entry and exit faces (F5, F7) of the deflection element (11) are curved aspherically, the aspheric faces being rotationally symmetric and centered to the optical axis (OA) of the imaging optic (16).

6. The ocular system according to one of the preceding claims, **characterized in that** the boundary surface (F5) of the deflection element (11) facing toward the first lens (10) is implemented as a diffractive face.

7. The ocular system according to one of the preceding claims coming **characterized in that** the deflection element (11) causes the folding of the beam path by 70° - 110°, preferably 90°.

8. The ocular system according to one of the preceding claims, **characterized in that** the first lens (10) and the image element (9) are mounted in a single frame (17).

9. The ocular system according to one of the preceding claims, **characterized in that** the first lens (10) an image element (9) are positively connected to one another.

10. The ocular system according to one of the preceding claims, **characterized in that** the imaging optic (16) and the image element (9) form an eye module, which is provided twice for both eyes of the user.

11. The ocular system according to Claim 10, **characterized in that** the spacing between the optic group (19) and the deflection element (11) is changeable in both modules independently of one another.

12. The ocular system according to Claim 10 or 11, **characterized in that** the beam path in the eye module from the image plane (9) up to the exit pupil (15) of the imaging optic (16) is essentially L-shaped, the eye modules being situated so that the spacing of the two optic groups (19) is less than the spacing of the two deflection elements (11).

13. The ocular system according to Claim 10 or 11, **characterized in that** he beam path in the eye module from the image plane (9) up to the exit pupil (15) of the imaging optic (16) is essentially L-shaped, the eye modules being situated so that the spacing of the two optic groups (19) is greater than the spacing of the two deflection elements (11).

14. A display device having an optical ocular system according to one of the preceding claims and a mounting module (4) to be worn on the head, in which the imaging optic (16) is fastened on the mounting module (4), wherein the image imaged using the imaging optic (16) is perceptible by a user wearing the display device.

15. A display device according to Claim 14, wherein the image element (9) is fastened on the mounting module (4).

**Revendications**

1. Système oculaire optique comportant un élément d'image (8) pour la production d'une image dans un plan objet (9), et une optique de formation d'image (16), qui reproduit l'image produite dans le plan objet (9) de telle sorte qu'un utilisateur puisse l'apercevoir dans un plan image (15), l'optique de formation d'image (16) comprenant une première lentille (10) ayant un indice de réfraction négatif et un premier élément de renvoi (11), disposé en aval de la première lentille (10), ayant un indice de réfraction positif, qui provoque une déviation de la trajectoire du rayon à l'aide d'une réflexion unique, l'interface (F5) dirigée vers la première lentille (10) de l'élément de renvoi (11) ayant une courbure convexe, **caractérisé en ce que** la lentille (10) et l'élément d'image (8) forment un premier groupe optique (19), une unité de translation (18) étant prévue, qui, pour la correction d'une amétropie sphérique de l'utilisateur, peut modifier la distance entre le premier groupe optique (19) et l'élément de renvoi (11), l'interface (F4) dirigée vers l'élément de renvoi (11) de la première lentille (10) ayant une courbure convexe.

2. Système oculaire selon la revendication 1, **caractérisé en ce que** l'unité de translation (18) peut déplacer le premier groupe optique (19) le long de l'axe optique (OA) de l'optique de formation d'image (16).

3. Système oculaire selon l'une des revendications ci-dessus, **caractérisé en ce que**, dans le premier groupe optique (19), la distance entre la première lentille (10) et le plan objet (9) est fixe.

4. Système oculaire selon l'une des revendications ci-dessus, **caractérisé en ce que** l'élément de renvoi (11) est configuré d'une seule pièce.

5. Système oculaire selon l'une des revendications ci-dessus, **caractérisé en ce que** les deux interfaces (F3, F4) de la première lentille (10), ainsi que la surface d'entrée et la surface de sortie (F5, F7) de l'élément de renvoi (11) présentent une courbure asphérique, les surfaces asphériques étant symétriques en rotation et centrées par rapport à l'axe optique (OA) de l'optique de formation d'image (16).

6. Système oculaire selon l'une des revendications ci-dessus, **caractérisé en ce que** l'interface (F5), dirigée vers la première lentille (10) de l'élément de renvoi (11), est configurée comme une surface diffractive.

7. Système oculaire selon l'une des revendications ci-dessus, **caractérisé en ce que** l'élément de renvoi (11) provoque une déviation de la trajectoire des rayons de 70 à 110°, de préférence de 90°.

8. Système oculaire selon l'une des revendications ci-dessus, **caractérisé en ce que** la première lentille (10) et l'élément d'image (9) sont maintenus dans une monture unique (17).

9. Système oculaire selon l'une des revendications ci-dessus, **caractérisé en ce que** la lentille (10) et l'élément d'image (9) sont assemblés l'un à l'autre par une liaison avec correspondance de forme.

10. Système oculaire selon l'une des revendications ci-dessus, **caractérisé en ce que** l'optique de formation d'image (16) et l'élément d'image (9) forment un module oculaire, qui est prévu en double, pour les deux yeux de l'utilisateur.

11. Système oculaire selon la revendication 10, **caractérisé en ce qu'**il est possible de modifier dans les deux modules oculaires, indépendamment l'un de l'autre, la distance entre le groupe optique (19) et l'élément de renvoi (11).

12. Système oculaire selon la revendication 10 ou 11, **caractérisé en ce que** la trajectoire des rayons dans le module oculaire, du plan d'image (9) à la pupille de sortie (15) de l'optique de formation d'image (16), a pour l'essentiel la forme d'un L, les modules oculaires étant disposés de telle sorte que la distance entre les deux groupes optiques (19) soit inférieure à la distance entre les deux éléments de renvoi (11).

13. Système oculaire selon la revendication 10 ou 11, **caractérisé en ce que** la trajectoire des rayons dans le module oculaire, du plan d'image (9) à la pupille de sortie (15) de l'optique de formation d'image (16), a pour l'essentiel la forme d'un L, les modules oculaires étant disposés de telle sorte que la distance entre les deux groupes optiques (19) soit supérieure à la distance entre les deux éléments de renvoi (11).

14. Dispositif d'affichage comportant un système oculaire optique selon l'une des revendications ci-dessus et un module de maintien (4), destiné à être supporté par la tête, dans lequel l'optique de formation d'image (16) est fixée au module de maintien (4), l'image formée par l'optique de formation d'image (16) pouvant être perçue par l'utilisateur portant le dispositif d'affichage.

15. Dispositif d'affichage selon la revendication 14, dans lequel l'élément d'image (9) est fixé au module de maintien (4).

Fig. 1

Fig. 2

Fig. 3

EP 2 130 083 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1513000 A1